# EUROPÄISCHE PATENTSCHRIFT

(11) **EP 2 064 108 B1**
(45) Veröffentlichungstag und Bekanntmachung des Hinweises auf die Patenterteilung: **17.04.2013**
(21) Anmeldenummer: 07802145.8
(22) Anmeldetag: 05.09.2007
(51) Int. Cl.: B62D 25/14

(54) **TRAGROHR EINER INSTRUMENTENTAFEL EINES KRAFTFAHRZEUGS**
MOUNTING TUBE FOR AN INSTRUMENT PANEL OF A MOTOR VEHICLE
TUBE PORTEUR D'UN TABLEAU DE BORD D'UN VEHICULE AUTOMOBILE

(30) Priorität: 22.09.2006 DE 102006044699
(43) Veröffentlichungstag der Anmeldung: 03.06.2009
(73) Patentinhaber: Bayerische Motoren Werke Aktiengesellschaft, 80809 München (DE)
(72) Erfinder: JANSSEN, Robert, 83209 Prien (DE)
(86) Internationale Anmeldenummer: PCT/EP2007/007738
(87) Internationale Veröffentlichungsnummer: WO 2008/034522

(56) Entgegenhaltungen:
- DE-A1- 10 121 402
- DE-A1- 19 935 654
- DE-A1-102004 044 056
- DE-C1- 4 423 642
- US-A1- 2003 160 414

## Beschreibung

Die Erfindung betrifft ein Tragrohr einer Instrumententafel eines Kraftfahrzeugs nach dem Oberbegriff des Patentanspruchs 1.

Aus der DE 101 21 402 A1 ist bereits ein Tragrohr einer Instrumententafel eines Kraftfahrzeugs bekannt, das zwei geraden Rohrstücken besteht. Die Endbereiche der beiden Rohrstücke sind über eine Muffe miteinander verbunden.

Ferner ist aus der DE 102 40 395 A1 ein Tragrohr einer Instrumententafel eines Kraftfahrzeugs bekannt. Das Tragrohr wird im Bereich der Hauptbelastungen zwischen einer A-Säule und einer Tunnelabstützung aus einem Rohrbogen gebildet. Durch Einlegen des Rohrbogens in ein Spritzgusswerkzeug können Anschlusselemente angespritzt werden.

Aufgabe der Erfindung ist es, ein Tragrohr einer Instrumententafel eines Kraftfahrzeugs zu schaffen, das ein geringes Gewicht aufweist.

Diese Aufgabe wird mit einem Tragrohr einer Instrumententafel mit den Merkmalen des Patentanspruchs 1 gelöst.

Erfindungsgemäß besteht ein Tragrohr einer Instrumententafel eines Kraftfahrzeugs in zumindest einem Bereich aus zwei oder mehreren geraden Rohrstücken, deren Endbereiche über Muffen miteinander verbunden sind. In die beiden Endbereiche zweier miteinander verbundener gerader Rohrstücke ist zudem ein Verbindungsstück formschlüssig eingesteckt. Entsprechend den jeweiligen lokalen Anforderungen können die einzelnen Rohrstücke unterschiedliche Wandstärken und / oder Außendurchmesser aufweisen. So kann jedes Rohrstück die an der jeweiligen Stelle im Tragrohr erforderliche Steifigkeit aufweisen. Andererseits ist kein Rohrstück unnötig dick, sodass das Tragrohr ein geringes Gewicht hat. Die Rohrstücke können einen runden Querschnitt, aber auch einen ovalen, einen rechteckigen, oder einen sonstigen geschlossenen Querschnitt aufweisen. Der innere Hohlraum eines Rohrstücks kann zur Steifigkeitserhöhung ausgeschäumt oder mit Stegen jeglicher Form verstärkt sein. Unter Umständen ist es auch sinnvoll, ein vorgefertigtes Füllstück in ein Rohrstück einzubringen, welches beispielsweise durch Kleben eine dauerhaft feste Verbindung zum Rohrstück eingeht. Ähnliche Maßnahmen können auch aus akustischen Gründen angewendet werden. Hierbei steht die dämpfende Wirkung im Vordergrund für die entsprechende Materialauswahl. Ein Rohrstück im Sinne dieser Erfindung muss nicht immer einen geschlossenen Querschnitt haben, sondern ein solches Rohrstück kann auch einen Hohlraum umgreifen, wie es beispielsweise bei einem C-förmigen Profilstück der Fall ist.

Das erfindungsgemäße Tragrohr ist aus mehreren einfachen Bauteilen zusammengesetzt. Die Rohrstücke können von industriell verfügbaren Rohren abgelängt werden. Jedes Rohrstück ist vom Außendurchmesser und von der Wandstärke her nur so dimensioniert, dass die Steifigkeitsanforderungen an der jeweiligen Stelle im Tragrohr erfüllt sind, sodass kein Rohrstück mehr Gewicht als erforderlich aufweist. Ein erfindungsgemäßes Rohrstück kann aber auch ein für den speziellen Anwendungsfall dimensioniertes und gefertigtes Rohrstück sein. Die Muffen sind relativ kleine und einfache Bauteile. Die Werkzeuge zur Herstellung der Muffen sind entsprechend einfach und können leicht geändert werden. Auch können die gleichen Muffen bei unterschiedlichen Kraftfahrzeugen verwendet werden. Bei einem Tragrohr eines größeren Fahrzeugs können beispielsweise die einzelnen Rohrstücke länger sein und eine größere Wandstärke aufweisen als die einzelnen Rohrstücke eines Tragrohres eines kleineren Fahrzeugs, aber es können die gleichen Muffen wie bei einem Tragrohr eines kleineren Fahrzeugs zum Einsatz kommen. Es können also wie bei einem Baukasten gleiche Einzelteile für unterschiedliche Tragrohre verwendet werden. Die einzelnen Rohrstücke und Muffen können auch so gestaltet sein, dass sie sowohl bei einem Tragrohr für ein linksgesteuertes Kraftfahrzeug als auch bei einem Tragrohr für ein rechtsgesteuertes Kraftfahrzeug eingesetzt werden können, indem nur die Reihenfolge der Anordnung der einzelnen Rohrstücke und Muffen variiert wird.

Bevorzugt ist zumindest ein Halter zur Befestigung des Tragrohrs an der Karosserie des Kraftfahrzeugs und / oder zumindest eine Aufnahme zur Anbindung von Anbauteilen am Tragrohr an einem geraden Rohrstück angebracht. Die Aufnahmen weisen beispielsweise Anschraubstellen oder Clipse auf, an denen dann die Anbauteile und / oder ein Kabelbaum befestigt werden können.

Die geraden Rohrstücke können aus Stahl, einem Leichtmetall wie Aluminium oder Magnesium, aus einem Kunststoff oder aus CFK bestehen. Auch können verschiedene Rohrstücke aus unterschiedlichen Materialen bestehen. Ein gerades Rohrstück aus CFK hat den Vorteil, dass es ein besonders geringes Gewicht bei einer hohen Steifigkeit aufweist. Auch ist die Wickeltechnologie für Rohre aus CFK ausgereift und diese Rohre sind industriell verfügbar. Spezifische CFK-Bauteile wie ein ganzes Tragrohr aus CFK dagegen sind durch die aufwendige Werkzeugtechnologie heute noch nicht wirtschaftlich herstellbar.

Die Muffen und / oder Halter und / oder Aufnahmen können als Gussbauteile aus Magnesium, Aluminium, Stahl oder einem Kunststoff dargestellt werden. Leichtmetalldruckgussbauteile haben den Vorteil, dass sie auf kleinen Druckgussmaschinen kostengünstig herstellbar sind. Auch können Änderungen an der Bauteilgeometrie schnell und flexibel vorgenommen werden. Die Gussbauteile können verrippt sein, sodass sie bei einem geringen Gewicht eine hohe Steifigkeit aufweisen. Zudem können in Gussbauteile besonders leicht weitere Funktionselemente, wie zum Beispiel Anschraubdome, etc., integriert werden. Günstigerweise dient zumindest eine Muffe zugleich als Aufnahme.

Als Verbindungstechnik zur Verbindung zweier gerader Rohrstücke mit einer Muffe oder zur Verbindung eines Rohrstücks mit einem Halter oder mit einer Aufnahme eignet sich Kleben besonders. Verklebungen haben den großen Vorteil, dass auch Bauteile aus völlig unterschiedlichen Werkstoffen miteinander verbunden werden können. So ist auch die Verbindung von zwei Rohrstücken aus CFK mit einer Muffe aus Magnesium fertigungstechnisch prozesssicher realisierbar. Bei Bedarf kann die Muffe zusätzlich mit zumindest einem Rohrabschnitt vernietet oder verschraubt werden.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: ein aus dem Stand der Technik bekanntes Tragrohr einer Instrumententafel eines Kraftfahrzeugs,
- Fig. 2: ein erfindungsgemäßes Tragrohr, das dem in Fig. 1 gezeigten Tragrohr entspricht,
- Fig. 3: einen Schnitt durch eine Muffe, die zwei Rohrstücke des in Fig. 2 gezeigten Tragrohrs miteinander verbindet,
- Fig. 4: einen Schnitt durch die in Fig. 3 gezeigte Muffe, wobei die beiden Rohrstücke zusätzlich mit einem Verbindungsstück miteinander verbunden sind, und
- Fig. 5: einen Schnitt durch eine alternative Ausführung einer Muffe.

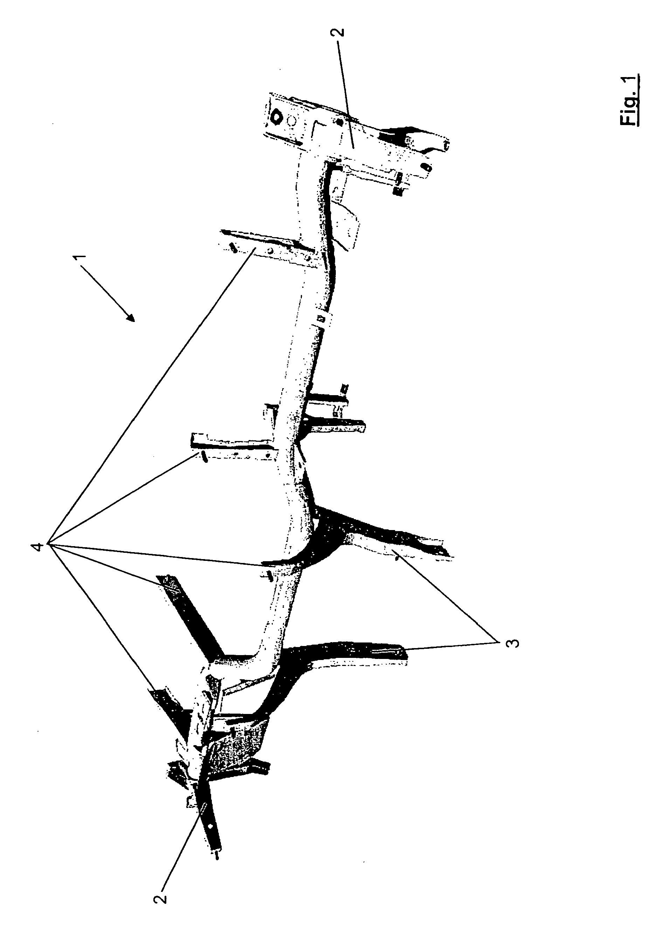

In Fig. 1 ist ein aus dem Stand der Technik bekanntes Tragrohr 1 einer Instrumententafel eines Kraftfahrzeugs dargestellt. Das Tragrohr 1 besteht aus einem Stahlrohr und erstreckt sich zwischen den A-Säulen der Karosserie des Kraftfahrzeugs. Bauraumbedingt verläuft es zwischen den A-Säulen nicht geradlinig, sondern weist einige Biegungen auf. Die Anbindung an die A-Säulen erfolgt beidseitig über einen Halter 2, der jeweils an einen Endbereichen des Tragrohrs 1 angeschweißt ist. Im mittleren Bereich des Tragrohrs 1 sind zwei Abstützungen 3 angeschweißt, die sich bis zum Bodenblech der Karosserie im Bereich des Kardantunnels erstrecken. Sie dienen zur Abstützung des Tragrohrs 1 und erhöhen dessen Steifigkeit. Darüber hinaus sind mehrere Aufnahmen 4 am Tragrohr 1 angeschweißt, über die zahlreiche Anbauteile, wie ein Head-up Display, ein Handschuhkasten, Luftführungskanäle, etc., am Tragrohr 1 befestigt sind.

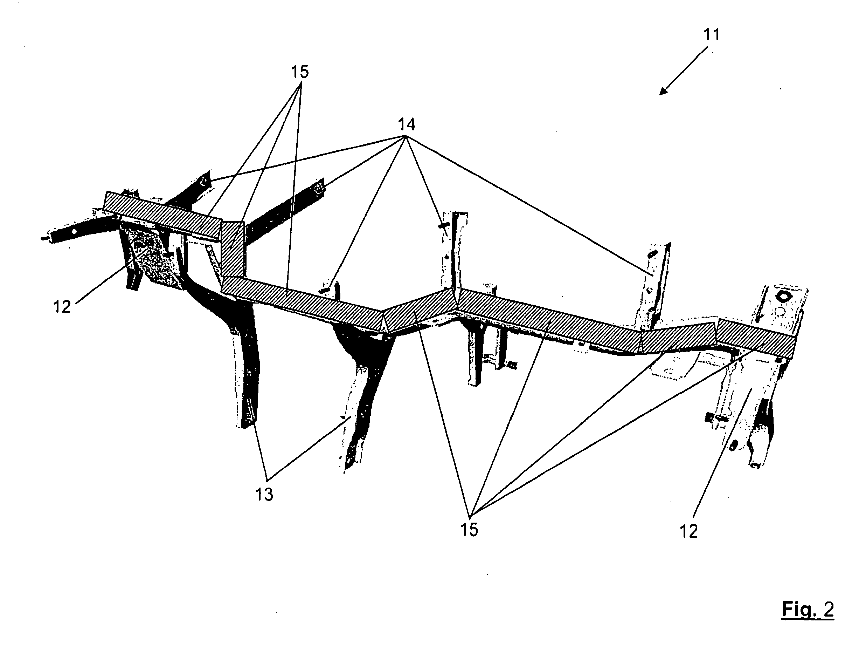

In Fig. 2 ist ein erfindungsgemäßes Tragrohr 11 dargestellt, das funktional dem in Fig. 1 dargestellten und aus dem Stand der Technik bekannten Tragrohr 1 entspricht. Das erfindungsgemäße Tragrohr 11 besteht aus mehreren geraden Rohrstücken 15 aus CFK, die von einem langen, industriell verfügbaren CFK-Rohr abgelängt wurden. Die geraden Rohrstücke 15 sind aneinander gereiht und über Muffen miteinander verbunden. Die Längsachsen der miteinander zu verbindenden Rohrstücke 15 können zueinander versetzt und / oder in einem Winkel zueinander verlaufen. Die Muffen sind Magnesiumdruckgussbauteile, die die Endbereiche der zu verbindenden Rohrstücke 15 jeweils umlaufend und formschlüssig wie eine Hülse umgeben. Die Endbereiche der geraden Rohrstücke 15 sind mit den Muffen verklebt. Die Muffen weisen jeweils einen mit angegossenen Befestigungsabschnitt auf, an denen Aufnahmen 14 und Abstützungen 13 befestigt sind. Die Muffen sind relativ kleine und einfache Bauteile, die in konventionellen Druckgussmaschinen hergestellt werden können. Die Werkzeuge dazu sind ebenfalls einfach gestaltet und können entsprechend leicht abgeändert werden.

Das Tragrohr 11 besteht also aus mehreren geraden Rohrstücken 15 und Muffen, die zusammengesteckt und miteinander verklebt wurden. An den beiden Endbereichen des Tragrohrs 11 ist jeweils ein Halter 12 zur Befestigung des Tragrohrs 11 an den A-Säulen angebracht. Die Halter 12 sind wie auch die Muffen als Magnesiumdruckgussbauteil ausgeführt, die die Endbereiche des Tragrohrs 11 formschlüssig umgeben und mit diesen verklebt sind.

Der Außendurchmesser und die Wandstärke jedes einzelnen Rohrstücks 15 ist nur so groß gewählt, wie es für die jeweilige Stelle im Tragrohr 11 erforderlich ist. Zudem bestehen die Rohrstücke 15 aus CFK und die Muffen und Halter 12 aus Magnesiumdruckguss. Diese Werkstoffe weisen jeweils eine hohe Steifigkeit bei einem geringen Gewicht auf. Damit ist das erfindungsgemäße Tragrohr 11 wesentlich leichter, als das aus dem Stand der Technik bekannte Tragrohr 1. Das bekannte Tragrohr 1 aus einem einzigen Stahlrohr ist entsprechend der höchsten Belastung dimensioniert. Diese höchste Belastung tritt aber nur lokal in einem Bereich des Tragrohrs 1 auf. In den übrigen Bereichen würde auch ein kleineres Stahlrohr oder ein Stahlrohr mit dünnerer Wandstärke die Anforderungen erfüllen. Damit ist das bekannte Tragrohr 1 unnötig schwer. Beim erfindungsgemäßen Tragrohr 11 dagegen weist nur das Rohrstück 15 in dem Bereich mit der höchsten Belastung die gro-βen Abmessungen und damit das hohe Gewicht auf.

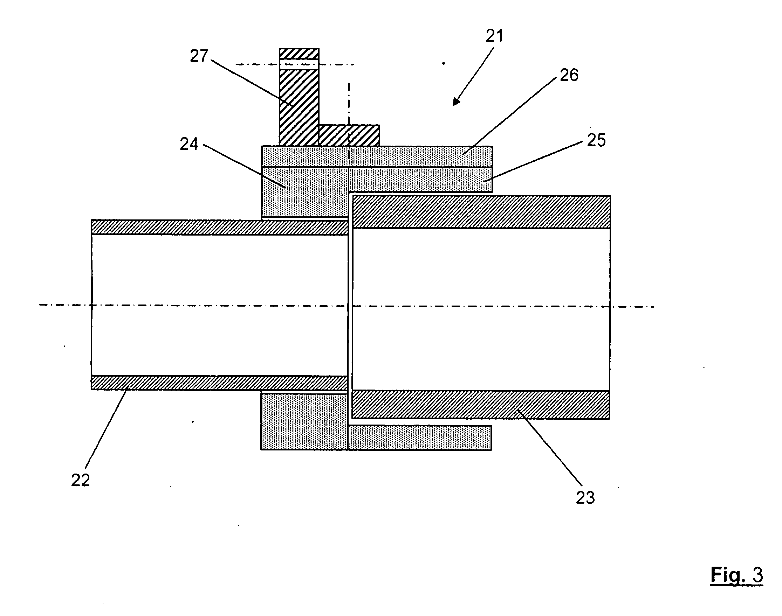

In Fig. 3 ist eine Muffe 21 in einer Detailansicht dargestellt. Die Muffe 21 verbindet die Endbereiche eines linken und eines rechten Rohrstücks 22 und 23, die axial aneinander stoßen. Dabei weist das linke Rohrstück 22 entsprechend der aufzunehmenden Belastung einen kleineren Außendurchmesser und eine geringere Wandstärke als das rechte Rohrstück 23 auf. Die Muffe 21 weist einen linken Abschnitt 24 auf, der als Hülse formschlüssig das linke Rohrstück 22 umgibt, und einen rechten Abschnitt 25, der hülsenförmig das rechte Rohrstück 23 umgreift. Neben diesen beiden Abschnitten 24 und 25 weist die Muffe 21 zudem einen Befestigungsabschnitt 26 auf, an den eine Aufnahme 27 angeschraubt ist. Die Muffe 21 ist mit allen drei Abschnitten 24, 25 und 26 einteilig als Magnesiumdruckgussbauteil ausgeführt. Die beiden Rohrstücke 22 und 23 sind in die Muffe 21 eingeschoben und mit dieser verklebt worden.

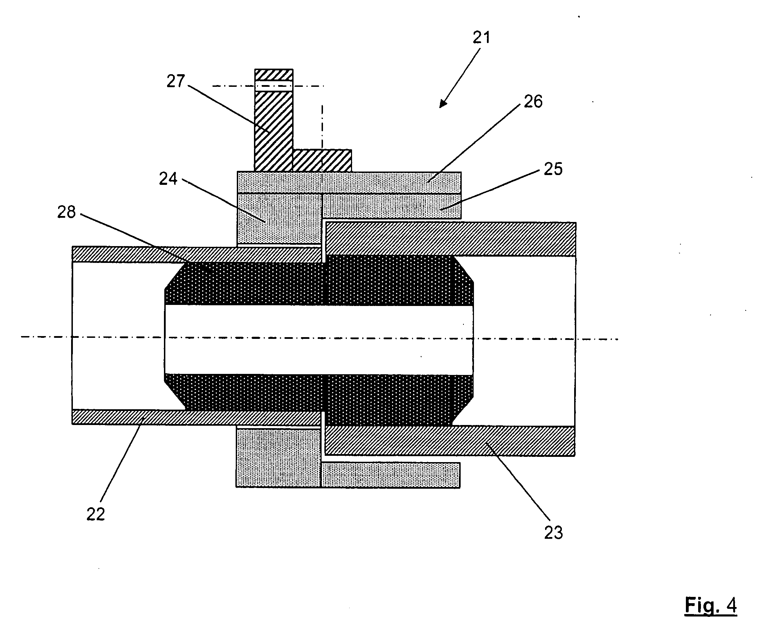

Zusätzlich kann - wie in Fig. 4 gezeigt - in die beiden miteinander zu verbindenden Rohrstücke 22 und 23 ein Verbindungsstück 28 formschlüssig in die beiden eingeschoben werden. Dieses Verbindungsstück 28 erhöht die Steifigkeit der Verbindung zwischen den beiden Rohrstücken 22 und 23.

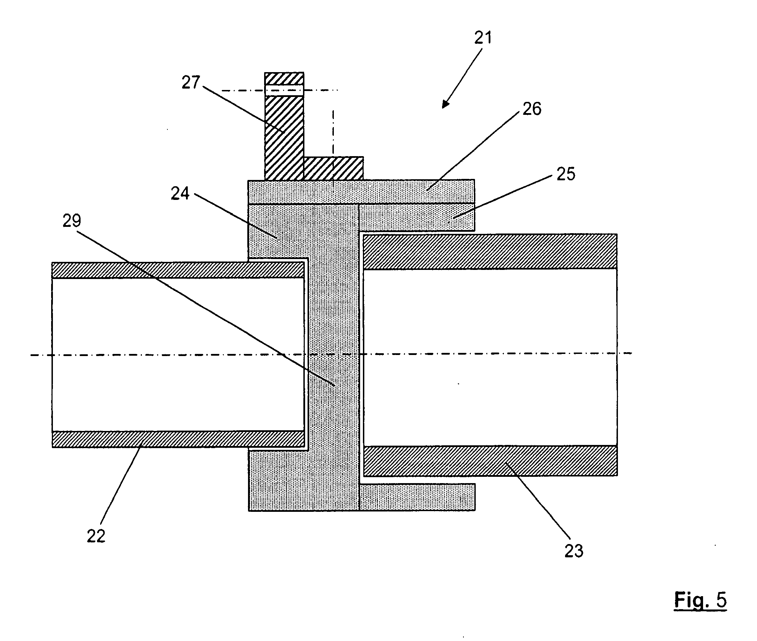

In Fig. 5 ist eine alternative Ausführung einer Muffe 21 gezeigt. Die Muffe 21 weist eine Trennwand 29 zwischen den beiden Rohrstücken 22 und 23 auf, sodass sich diese nicht berühren können. Dies ist insbesondere dann von Bedeutung, wenn die beiden Rohrstücke 22 und 23 aus unterschiedlichen Materialen bestehen, sodass es zu einer Kontaktkorrosion kommen könnte. Diese wird durch die Trennwand 29 vermieden.

## Patentansprüche

1. Tragrohr (11) einer Instrumententafel eines Kraftfahrzeugs, wobei das Tragrohr (11) in zumindest einem Bereich aus zwei oder mehreren geraden Rohrstücken (15, 22, 23) besteht, deren Endbereiche über Muffen (21) miteinander verbunden sind, **dadurch gekennzeichnet, dass** ein Verbindungsstück (28) formschlüssig in die beiden Endbereiche zweier miteinander verbundener gerader Rohrstücke (22, 23) eingesteckt ist.

2. Tragrohr nach Anspruch 1, **dadurch gekennzeichnet, dass** zumindest ein Halter (12) zur Befestigung des Tragrohrs (11) an der Karosserie des Kraftfahrzeugs und / oder zumindest eine Aufnahme (14) zur Anbindung von Anbauteilen am Tragrohr (11) an einem geraden Rohrstück (15, 22, 23) angebracht ist.

3. Tragrohr nach Anspruch 1 oder 2, **dadurch gekennzeichnet, dass** zumindest zwei gerade Rohrstücke (15, 22, 23) unterschiedliche Wandstärken und / oder Außendurchmesser aufweisen.

4. Tragrohr nach einem der vorhergehenden Ansprüche, **dadurch gekennzeichnet, dass** zumindest eine Muffe (21) die Endbereiche der beiden zu verbindenden geraden Rohrstücke (22, 23) umlaufend umgibt.

5. Tragrohr nach einem der vorhergehenden Ansprüche, **dadurch gekennzeichnet, dass** zumindest ein gerades Rohrstück (15, 22, 23) aus CFK besteht.

6. Tragrohr nach einem der vorhergehenden Ansprüche, **dadurch gekennzeichnet, dass** zumindest eine Muffe (21) und / oder zumindest ein Halter (12) und / oder zumindest eine Aufnahme (14) ein Leichtmetall-Druckgussbauteil ist.

7. Tragrohr nach einem der vorhergehenden Ansprüche, **dadurch gekennzeichnet, dass** zumindest eine Muffe (21) und / oder zumindest ein Halter (12) und / oder zumindest eine Aufnahme (14) ein Kunststoffspritzgussbauteil ist.

8. Tragrohr nach Anspruch 6 oder 7, **dadurch gekennzeichnet, dass** zumindest eine Muffe (21) zugleich als Aufnahme (26, 27) dient.

9. Tragrohr nach einem der vorhergehenden Ansprüche, **dadurch gekennzeichnet, dass** zumindest eine Muffe (21) mit den beiden geraden Rohrstücken (22, 23), die sie miteinander verbindet, verklebt ist.

10. Tragrohr nach einem der vorhergehenden Ansprüche, **dadurch gekennzeichnet, dass** zumindest ein Halter (12) und / oder zumindest eine Aufnahme (14) mit einem geraden Rohrstück (15) verklebt ist.

## Claims

1. A tube (11) for bracing a dashboard on a motor vehicle, wherein at least one part of the bracing tube (11) comprises two or more straight portions (15, 22, 23), the end regions of which are joined together by sleeves (21), **characterised in that** a connecting piece (28) is positively inserted into the two end regions of two joined straight tube portions (22, 23).

2. A tube according to claim 1, **characterised in that** at least one holder (12) for fastening the bracing tube (11) to the vehicle body and/or at least one receiver (14) for connecting add-on pieces is disposed on a straight portion (15, 22, 23) of the bracing tube (11).

3. A bracing tube according to claim 1 or claim 2, **characterised in that** at least two straight portions (15, 22, 23) have different wall thicknesses and/or outer diameters.

4. A tube according to any of the preceding claims, **characterised in that** at least one sleeve (21) surrounds the end regions of the two straight tube portions (22, 23) for joining.

5. A tube according to any of the preceding claims, **characterised in that** at least one straight portion (15, 22, 23) is made of CFK.

6. A tube according to any of the preceding claims, **characterised in that** at least one sleeve (21) and/or at least one holder (12) and/or at least one receiver (14) is a light-metal die casting.

7. A tube according to any of the preceding claims, **characterised in that** at least one sleeve (21) and/or at least one holder (12) and/or at least one receiver (14) is a plastics material injection-moulded part.

8. A tube according to claim 6 or claim 7, **characterised in that** at least one sleeve (21) also serves as a receiver (26, 27).

9. A tube according to any of the preceding claims, **characterised in that** at least one sleeve (21) is stuck to the two straight joined portions (22, 23) which it joins.

10. A tube according to any of the preceding claims, **characterised in that** at least one holder (12) and/or at least one receiver (14) is stuck to a straight tube portion (15).

## Revendications

1. Tube support (11) d'un tableau de bord de véhicule automobile, ce tube support (11) étant constitué dans au moins une zone de deux ou d'un plus grand nombre de tronçons tubulaires linéaires (15, 22, 23) dont les extrémités sont reliées par des manchons (21),
**caractérisé en ce qu'**
une pièce de liaison (28) est enfichée par une liaison par la forme dans les deux zones d'extrémité de deux tronçons tubulaires rectilignes (22, 23) reliés l'un à l'autre.

2. Tube support conforme à la revendication 1,
**caractérisé en ce qu'**
au moins un élément d'appui (12) permettant la fixation du tube support (11) est monté sur la carrosserie du véhicule et/ou au moins un élément de réception (14) pour permettre la liaison de composants sur le tube support (11) est monté sur un tronçon tubulaire rectiligne (15, 22, 23).

3. Tube support conforme à la revendication 1 ou 2,
**caractérisé en ce qu'**
au moins deux tronçons tubulaires rectilignes (15, 22, 23) comportent des épaisseurs de paroi et/ou des diamètres externes différents.

4. Tube support conforme à l'une des revendications précédentes,
**caractérisé en ce qu'**
au moins un manchon (21) entoure sur leur périphérie les zones d'extrémité des deux tronçons tubulaires linéaires (22, 23) rectilignes à relier.

5. Tube support conforme à l'une des revendications précédentes,
**caractérisé en ce qu'**
au moins un tronçon tubulaire rectiligne (15, 22, 23) est réalisé en CFK (matériau synthétique renforcé par des fibres).

6. Tube support conforme à l'une des revendications précédentes,
**caractérisé en ce qu'**
au moins un manchon (21) et/ou au moins un élément d'appui (12) et/ou au moins un élément de réception (14) est un élément obtenu par moulage sous pression en un métal léger.

7. Tube support conforme à l'une des revendications précédentes,
**caractérisé en ce qu'**
au moins un manchon (21) et/ou au moins un élément d'appui (12) et/ou au moins un élément de réception (14) est un élément injecté en matière plastique.

8. Tube support conforme à la revendication 6 ou 7,
**caractérisé en ce qu'**
au moins un manchon (21) sert simultanément d'élément de réception (26, 27).

9. Tube support conforme à l'une des revendications précédentes,
**caractérisé en ce qu'**
au moins un manchon (21) est collé sur les deux tronçons tubulaires rectilignes (22, 23) qu'il relie l'un à l'autre.

10. Tube support conforme à l'une des revendications précédentes,
**caractérisé en ce qu'**
au moins un élément d'appui (12) et/ou au moins un élément de réception (14) est collé sur un tronçon tubulaire rectiligne (15).
